(19) **Europäisches Patentamt European Patent Office Office européen des brevets**

(11) **EP 3 796 220 B1**

(12) **EUROPEAN PATENT SPECIFICATION**

(45) Date of publication and mention
of the grant of the patent:
**04.06.2025 Bulletin 2025/23**

(21) Application number: **19197994.7**

(22) Date of filing: **18.09.2019**

(51) International Patent Classification (IPC):
*G06N 3/045* (2023.01)   *G06N 3/047* (2023.01)
*G06N 3/088* (2023.01)   *G06V 10/44* (2022.01)
*G06V 10/764* (2022.01)   *G06V 10/776* (2022.01)
*G06V 10/82* (2022.01)

(52) Cooperative Patent Classification (CPC):
**G06N 3/088; G06N 3/045; G06N 3/047;
G06V 10/454; G06V 10/764; G06V 10/776;
G06V 10/82**

(54) **TRAINING A GENERATOR BASED ON A CONFIDENCE SCORE PROVIDED BY A DISCRIMINATOR**

TRAINIEREN EINES GENERATORS BASIEREND AUF EINEM KONFIDENZWERT EINES DISKRIMINATORS

ENTRAÎNEMENT D'UN GÉNÉRATEUR SUR LA BASE D'UN SCORE DE CONFIANCE D'UN DISCRIMINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.03.2021 Bulletin 2021/12**

(73) Proprietor: **Robert Bosch GmbH
70442 Stuttgart (DE)**

(72) Inventors:
• **Kandemir, Melih
70439 Stuttgart (DE)**
• **Xu, Buote
71034 Boeblingen (DE)**
• **Barsim, Karim Said Mahmoud
70372 Stuttgart (DE)**
• **Zafar, Muhammad Bilal
71272 Renningen (DE)**

(56) References cited:
**US-A1- 2019 130 266     US-A1- 2019 197 368
US-A1- 2019 197 670**

• **MARIIA VLADIMIROVA ET AL: "Understanding Priors in Bayesian Neural Networks at the Unit Level", PROCEEDINGS OF THE 36TH INTERNATIONAL CONFERENCE ON MACHINE LEARNING, vol. 97, 15 June 2019 (2019-06-15), pages 6458 - 6467, XP055671583**

## Description

### FIELD OF THE INVENTION

The invention relates to a computer-implemented method of training a generator model. The invention further relates to a system for training a generator model. The invention also relates to a computer-readable medium comprising instructions to perform the above method.

### BACKGROUND OF THE INVENTION

A major challenge when applying machine learnable models in the area of automotive perception systems is the availability of training and test data. For example, such data can include image data and various other types of sensor data, which may be fused to establish a 360-degree view around a vehicle. This data can then be used, e.g., to classify the presence or absence of pedestrians on the road. The more data is available, the better the training and testing that can be performed, and therefore, the more robust, reliable and generalizable the resulting model can become. Unfortunately, it is hard to obtain such data. Indeed, obtaining real data requires testing the automotive perception system in actual traffic situations. Not only is it costly to drive around test vehicles with such systems installed, it can also be dangerous if decisions are based on an automotive perception system that has not yet been fully trained. Also, collecting real data typically requires collecting data for a lot of different combinations of various parameters, e.g., amount of daylight, weather, amount of traffic, etc. It is particularly complicated to collect real-world data of corner cases of such models, such as near-collisions. Generally, in various application areas and especially when applying machine learning to sensor data, there is a need to efficiently obtain realistic test and training data.

In "Generative Adversarial Networks" by I. Goodfellow et al. (available at https://arxiv.org/abs/1406.2661), a so-called generative adversarial network (GAN) is proposed. Such a GAN comprises a generator model for generating synthetic data that can be used, e.g., to train or test another machine learnable model. The generator model is trained simultaneously with a discriminator model that determines a discriminator score estimating whether a sample came from the training data or from the generator. The generator model is trained to trick, in other words, mislead the discriminator model into making a false prediction while the discriminator model is trained to maximize the accuracy of the estimation whether the sample came from the training data or the fake/synthesised one. Accordingly, given training data from a certain application domain, e.g., images of pedestrians on the road, the generator effectively learns a distribution that generates the training data. After the training is complete, the generator model can be used to generate unseen yet realistic samples from the implicitly learnt distribution. Promising results have been obtained using GANs. For example, GANs have been shown to be able to reproduce natural looking images at high resolution and at sufficient quality to even fool human observers. Unfortunately, existing approaches for training GANs are unsatisfactory. The training process of GANs typically suffers from unstable training dynamics. For example, an imbalance between the progress in training the generator model and the discriminator model can result in vanishing gradients, in which the training process is saturated before a sufficiently good generator model is trained. Similarly, the training of GANs frequently shows oscillatory behaviour, which leads to low convergence rates and can only be partially addressed by external regularization. A further problem is a lack of intuitive performance indicators for the training process. As a result, training a GAN typically requires external audit and termination. These problems in training GANs frequently result in degradation of quality of data generated by the generator model. For example, generated data may not look realistic and/or may lack variety, e.g., the generator model may generate the same few data samples over and over again. These problems severely hamper the use of GANs in real environments.

US 2019/197670 A1 discloses a computing system, which access a training image and a reference image of a person and an incomplete image. A generate may generate an in-painted image based on the incomplete image, and a discriminator may be used to determine whether each of the in-painted image, the training image, and the reference image is likely generated by the generator. The system may compute losses based on the determinations and update the discriminator accordingly. Using the updated discriminator, the system may determine whether a second in-painted image generated by the generator is likely generated by the generator. The system may compute a loss based on the determination and update the generator accordingly. Once training is complete, the generator may he used to generate a modified version of a given image, such as making the eyes of a person appear open even if they were closed in the input image.

US 2019/130266 A1 discloses a system, electronic device and method for improved neural network training are provided. The electronic device includes: a processor, a memory storing a Generative adversarial network (GAN) to learn from unlabeled data by engaging a generative model in an adversarial game with a discriminator; and one or more programs stored in the memory and configured to be executed by the one or more processors, the one or more programs including instructions for training the Generative adversarial network using a regularizer to encourage the discriminator to properly use its capacity and hidden representations of the discriminator to have high entropy.

MARIIA VLADIMIROVA ET AL, "Understanding Priors in Bayesian Neural Networks at the Unit Level", PROCEEDINGS OF THE 36TH INTERNATIONAL CONFERENCE ON MACHINE LEARNING, (20190615), vol. 97, pages 6458 - 6467, investigate deep Bayesian neural networks with Gaussian weight priors and a class of ReLU-like nonlinearities. Their main result establishes that the induced prior distribution on the units before and after activation becomes increasingly heavy-tailed with the depth of the layer.

US 2019/197368 A1 discloses mechanisms to implement a generative adversarial network (GAN) that is trained based on labeled image data, unlabeled image data, and generated image data generated by a generator of the GAN. The GAN comprises a loss function that comprises error components for each of the labeled image data, unlabeled image data, and generated image data which is used to train the GAN. A new data source for which the trained GAN is to be adapted is identified and the trained GAN is adapted for the new data source. Image data in the new data source is classified by applying the adapted GAN to the data in the new data source. Adapting the trained GAN includes obtaining a minimized set of labeled images and utilizing the minimized set of images to perform the adapting of the trained GAN.

## SUMMARY OF THE INVENTION

In accordance with a first aspect of the invention, a computer-implemented method of training a generator model is proposed, as defined by claim 1. In accordance with a further aspect of the invention, a system for training a generator model is proposed, as defined by claim 11. In accordance with an aspect of the invention, a computer-readable medium is provided as defined by claim 13.

As described herein, various claims relate to a generator model configured to generate synthetic instances, and a discriminator model configured to determine discriminator scores for input instances. Discriminator scores are also sometimes called prediction scores. The generator model and discriminator model may together form a so-called Generative Adversarial Network.

As is known in the art per se, in various embodiments, the generator model and discriminator model may be trained, in other words, their sets of parameters may be learned, in a repeated process. In an iteration, the discriminator model may be trained one or more times using the generator model and a set of actual instances, e.g., one, two, or at least three times; and the generator model may be trained one or more times using the discriminator model, e.g., one, two or at least five times. Many such iterations may be needed, for example, at least 100, at least 1000, or at least 10000. The generator model may be trained by optimizing a first objective function encouraging generation of synthetic instances which the discriminator model determines to be actual instances, e.g., by maximizing an objective function that, other things being equal, increases as the discriminator model provides a discriminator score that indicates more that the input instance is an actual instance. The discriminator model may be trained by optimizing a second objective function encouraging correct determination whether input instances are synthetic instances or actual instances, e.g., by maximizing an objective function that, other things being equal, increases as the discriminator score for a synthetic instance indicates more that it is a synthetic instances and that increases as the discriminator score for an actual instance indicates more that it is an actual instance.

The discriminator model is configured to additionally determine a confidence score of the discriminator score of the input instance, indicating a confidence of the discriminator model in the prediction given by the discriminator score based on the given sample. The discriminator model is a Bayesian model providing a probability distribution for the discriminator output, where the discriminator is a mean of the output probability distribution and the confidence score is a further parameter of the probability distribution, namely a variance. For instance, the Bayesian model can be a parametric Gaussian model. Use of a Bayesian model is not necessary in principle though in that, for example, a traditional machine learning model can also be used which provides the discriminator score and confidence score as regular outputs. The confidence score may be put to use in various beneficial ways.

The confidence score may be used in the first objective function used to train the generator model, and in the second objective function used to train the discriminator model. As explained below, this may improve training, e.g., by providing a more reliable training signal and thereby causing faster convergence and less oscillatory training behaviour.

One way to use the objective function in training is to encourage high confidence for desirable outcomes, e.g., actual-looking synthetic instances for the generator model or correct discriminator scores for the discriminator model, and low confidence for undesirable outcomes. For example, the discriminator model may be penalized less for a wrong determination if it provides the determination with low confidence, but may also be rewarded less for a correct determination if it provides the determination with low confidence. Thereby, the discriminator model may be encouraged to provide accurate confidence scores. The confidence scores may then be used when training the generator model so that generated instances determined to be actual with low confidence, which are less likely to be good, are favoured less than high-confidence actual instances; and generated instances determined to be synthetic with low confidence, which are less likely to be bad, are penalized less than high-confidence synthetic instances. For example, in various embodiments, the objective functions may be maximal for confident correct predictions. If confidence is reduced, the value of the objective function may be reduced, thereby encouraging the discriminator model to increase its mean predictions further, or provide more confident predictions.

For example, when training the generator model, the first objective function may encourage high confidence for generated instances determined to be actual instances, and low confidence for generated instances determined to be synthetic instances. For example, if the first objective function is to be maximized and the discriminator score provided by the discriminator model indicates relatively strongly that the instance is real, e.g., is above a certain threshold $T_1$, then the objective function may be mostly or fully increasing as the confidence indicated by the confidence score is higher, and it may be similarly decreasing if the first objective function is to be minimized. On the other hand, if the discriminator score indicates relatively strongly that the instance is synthetic, e.g., is below a certain threshold $T_2$, then an objective function to be maximized may be mostly or fully decreasing as the confidence is higher, etc.

Similarly, when training the discriminator model, the second objective function may encourage high confidence for correct determinations, e.g., determining a synthetic instance to be synthetic or determining an actual instance to be actual, and low confidence for incorrect determinations. For example, if the second objective function is to be maximized, and the discriminator score provided by the discriminator model for an actual instance indicates relatively strongly that the instance is indeed real, e.g., is above a certain threshold $T_3$, then the objective function may be fully or mostly increasing as the confidence indicated by the confidence score increases, and similarly for synthetic instances indicated to be synthetic. On the other hand, if the discriminator score indicates that an actual instance is synthetic or a synthetic instance is actual, e.g., with a discriminator score exceeding a threshold $T_4$, then the objective function may be mostly or fully decreasing as the confidence increases.

Various ways of phrasing the objective functions as discussed above, e.g., by suitably adapting existing objective functions that do not use confidence scores, will be envisaged by the skilled person.

The problem of how to use the confidence score when training the generator model and/or discriminator model may also be considered from a Bayesian perspective. From this perspective, the discriminator score and the confidence score returned by the discriminator model may be used to define a probability that the discriminator model determines an input instance as an actual instance or as a synthetic instance. Accordingly, the probability may provide a discriminator model output similar to a discriminator model output of a normal GAN. The first and/or second objective function may be defined based on this probability. Defining the objective function from this Bayesian perspective may provide a particularly effective choice for the objective functions, and is applicable for various types of discriminator models that provides values interpretable as parameters of a probability distribution. It is noted that various properties of the objective functions, e.g., encouraging high confidence for correct predictions and low confidence for wrong predictions, may in many cases obtained as an automatic consequence of adopting this Bayesian perspective.

Another aspect that may be observed by adopting this Bayesian perspective is a linearization of the objective function as the confidence decreases. The case where the discriminator model returns a classification score with high confidence may be seen to approximate traditional GAN training methods. Since a high confidence implies a low spread in classification score, large changes in the objective function may be observed for discriminator scores close to the decision boundary between actual and synthetic instances, whereas on the other hand, clear classifications of real or synthetic samples may result in a saturated objective function, e.g., with minimal changes. As a consequence, in traditional GAN training, e.g., in overly confident settings, as the saturation limit of the training is reached, vanishing gradients may be encountered and training may become very slow, or even non-convergent in the case of adversarial training. In particular, in GANs, vanishing gradients may indicate that the generator is training relatively slowly and the discriminator is training faster than the generator, e.g., the discriminator may be closer to the training objective. As a consequence, the discriminator may become stronger, causing the gradients reaching the generator to vanish more, causing slower learning or even no learning at all. Interestingly however, if the discriminator model according to various embodiments provides predictions with less confidence, there may be a larger spread in classification score, and the objective function may become more linear as a function of the classification score. Effectively, this may provide additional smooth paths along which to optimize the objective function, for example, paths in which the accuracy of the discriminator score increases along with the confidence that the discriminator model assigns to it. Accordingly, training progress may be improved.

By thus using the confidence score in the objective functions for training the discriminator model and the generator model, the inventors observed various beneficial effects, including faster convergence. Generally, a more reliable training signal may be obtained. In many cases, the inventors observed more stable training than in standard GAN architectures, with a reduced effect of oscillatory behaviour. For example, training instances for which the discriminator model has less confidence and which accordingly represent a relatively noisy training signal, may less strongly affect the models. Interestingly, the inventors found that, when using the confidence score, external regularization techniques may be avoided, and accordingly, e.g., the selection of regularization hyperparameters and/or the introduction of bias due to such external regularization may be avoided.

Interestingly, the discriminator model returns itself a discriminator score and a confidence score for that discriminator score, and thereby, sampling discriminator parameters to get a Bayesian treatment may be avoided. As a consequence, a training process for the generator model and/or discriminator model may be obtained that has a relatively small computational overhead over standard GAN architectures, while still allowing to provide more stable training dynamics.

Instead of or in addition to using the confidence score to better train the generator model, the confidence score also advantageously provides a feedback signal on the progress of the training. For example, when performing the iterative training of the generator model and discriminator model discussed above, a stopping criterion may be evaluated based at least in part on confidence scores determined during said training. For example, if the stopping criterion is met, then training may be stopped. Confidence scores indicating high or increasing confidence, e.g., low or decreasing variance of the discriminator scores, may indicate successful training of the generator. For instance, the training may be stopped if an average confidence score, e.g., over real instances, over actual instances, or both, reaches a predefined, possibly time-dependent, threshold. As another example, the stopping criterion may be based on a statistical test, e.g., between confidence scores for discriminator scores strongly indicating a synthetic or actual instance, and confidence scores weakly indicating a synthetic or actual instance. Interestingly, by using the confidence score as a feedback signal, e.g., in a stopping criterion, a meaningful performance indicator may be obtained that is relatively independent from, and comparable between, various datasets and architectures for the generative and discriminator model. Traditional GANs did not provide such a feedback signal. Specifically, using the confidence score as a stopping criterion may allow to prevent over-training and associated problems such as mode collapse, overfitting, and/or memorization, and may allow training to stop earlier if the generator model has reached a satisfactory quality, saving resources.

Several of the measures discussed here relate to generating synthetic instances, and to determining whether input instances are synthetic instances or actual instances. The techniques described herein are applicable to instances representing various kinds of data. In particular, the techniques are particularly applicable to sensor data, e.g., the generation of synthetic sensor data based on actual sensor data obtained from one or more sensors. Sensor data may be, e.g., audio data, video data, radar data, LiDAR data, ultrasonic data, or various individual sensor readings or their histories. The synthetic instances, input instances, and actual instances each comprise images.

The generator model typically generates a synthetic instance from a latent feature vector. A discriminator score for an input instance may indicate whether the input instance is a synthetic instance or an actual instance. In other words, the discriminator score may represent a proximity measure between a distribution of synthetic instances generated by the generator model, and a distribution of actual instances sampled from a set of actual instances, e.g., comprised in a training dataset. The distribution of synthetic instances may be the induced distribution obtained by sampling latent feature vectors from a given distribution, e.g., standard normal or uniform. The distribution of actual instances may be obtained by sampling randomly from the training dataset. The generator model may be trained to generate realistically looking synthetic instances, or in other words, to minimize the proximity as indicated by the discriminator model between its induced distribution and the distribution of actual instances. The discriminator model may be trained to learn an accurate proximity measure between the two distributions. Various known types of machine learnable models can be used as the generator model. For example, the generator model may be a neural network, sometimes also called artificial neural network, such as a deep neural network or a convolutional neural network. In this case, the set of parameters of the generative model may comprise weights of nodes of the neural network. For example, the number of layers of the generator model may be at least 5 or at least 10, and the number of nodes and/or weights may be at least 1000 or at least 10000. Depending on the type of synthetic instance to be generated, various known architectures for neural networks or other types of machine learnable models may be used. It is beneficial from the point of view of efficiency of training to use a generator model which is amenable to gradient-based optimization, e.g., continuous and/or differentiable in its set of parameters.

Training may be performed using stochastic approaches such as stochastic gradient descent, as known in the art per se. For example, the Adam optimizer as disclosed in Kingma and Ba, "Adam: A Method for Stochastic Optimization" (available at https://arxiv.org/abs/1412.6980) may be used. As is known, such optimization methods may be heuristic and/or arrive at a local optimum. Training may be performed on an instance-by-instance basis or in batches, e.g., of at most or at least 64 or at most or at least 256 instances.

Optionally, an input instance comprises an input image. Due to their relative complexity and their ubiquity in perception systems, the use of generator models to generate synthetic images is particularly appealing. Various architectures for generative and discriminator models that work well on images are known in the art per se and may be applied or adapted for use herein, e.g., convolutional neural networks and the like.

The confidence score is a variance of the discriminator output. For example, a confidence score of 0 may indicate zero variance, e.g., a maximal confidence, whereas higher confidence scores may indicate higher variance, e.g., lower confidence. Accordingly, the discriminator score, which is a mean of the discriminator output, and the confidence score taken together may provide first and second moments of a probability distribution defined by the discriminator model, which may thus be regarded as a Bayesian model.

The discriminator model comprises a Bayesian neural network (BNN). As is known in the art, in a BNN, weights between some or all neurons of the BNN are defined by probability distributions. These parameters are comprised in the set of parameters learned when training the discriminator model. A given probability distribution over inputs is propagated through the BNN to obtain a probability distribution over the output, of which the discriminator score and/or confidence score are parameters, namely the mean and variance. For example, the discriminator score and confidence score for a given input instance may be obtained by propagating a Dirac delta distribution corresponding to the input instance through the BNN. For various types of sensor inputs such as images or sound, Bayesian neural networks may allow to obtain a relatively efficient and effective discriminator model.

Optionally, when using a BNN, an output of a neuron may be defined by applying an activation function to an activation signal. The activation signal may be based on the product of a weight between the neuron and another neuron and the output of that other neuron. For example, the activation signal may be defined as an inner product of respective weights and outputs of neurons of a preceding layer of the BNN. To determine a discriminator score and confidence score using the BNN, a mean and a variance of the activation signal are determined based on the parameters of the probability distribution for the weight between the neurons and a mean and a variance of the output of the other neuron. A mean and a variance of the output of the neuron are then determined therefrom. Interestingly, the mean and the variance of the output of the neuron can thus be determined efficiently, without the need to perform sampling. By determining neuron outputs this way throughout the BNN, the discriminator score and confidence score of the model output, i.e., a mean and variance of an output neuron of the BNN, may be computed without sampling.

Optionally, the activation function for some or all internal nodes of the BNN may comprise one or more of a rectified linear unit, a hyperbolic tangent, and a sigmoid. For such types of activation functions, interestingly, if the activation signal is represented by a mean and a variance, then the mean and variance of the output of the neuron may be determined particularly efficiently from the mean and variance of the activation signal, e.g., by applying a closed-form of an integral over the activation signal output.

Optionally, the activation signal may comprise at least five or at least ten products of respective weights and outputs of neurons of the BNN. It may be observed that, when an activation signal is defined as an inner product of weights and previous layer outputs, this activation signal may approximately follow a normal distribution. In particular, because of the central limit theorem (CLT) known from probability theory, this approximation may become better as the number of weights and previous layer outputs increases, e.g., to at least five or at least ten. Accordingly, the mean and variance of the activation signal may be accurately approximated assuming a normal distribution, for example, by moment matching.

Optionally, for some or all incoming weights of a neuron, the probability distribution of the weight is a Gaussian distribution or a truncated Gaussian distribution. In such cases, the mean and variance of the activation signal of the neuron may be computed relatively efficiently, e.g., using moment matching. In particular, in the case of a Gaussian distribution, the mean may be computed as an inner product between the means of the weights and the means of the input neurons and the variance can be computed as a sum over respective weight-neuron pairs as well. Generator models trained as described herein may be used in various settings. For example, the trained generator model may be used to generate one or more synthetic instances. One possible use of such generated synthetic instances may be as training and/or test data in training a further machine learnable model, e.g., a neural network or similar. Although the generation of synthetic instances and/or the training of the further machine learnable model may be performed on the same system that also trains the generator model itself, it is noted that such generation or training may also be performed on one or more separate systems, e.g., a synthetic data generation system that obtains a generator model trained as described herein and uses it to generate the synthetic instances, and/or a training system that obtains a generator model or generated synthetic instances and uses them to train the machine learnable model. For example, using synthetic instances for training may allow the further machine learnable model to be trained on a larger dataset and/or on a dataset of situations for which it is hard to obtain training data, e.g., dangerous traffic situations, rare combinations of weather and/or traffic conditions, etcetera, obtaining a more accurate model. In an embodiment, the further machine learnable model may be an image classifier, e.g., configured to classify products of a manufacturing system as defective or non-defective. In another embodiment, the further machine learning may be comprised in an automotive perception system, e.g., to classify traffic situations according to the presence or absence of pedestrians on the road, etcetera. More generally, the further machine learnable model may classify sensor data obtained from a sensor, e.g., a radar sensor, a LiDAR sensor, an ultrasonic motion signals, etc. In the above cases, training data is typically rare, so that the use of a generator model to augment the data can particularly help to train the downstream machine learnable model.

As an example, the further machine learnable model may be a classification model or a regression model. In such a case, for example, labels may be obtained for the one or more synthetic instances, and the further machine learnable model may be trained based on the one or more synthetic instances and the labels. Accordingly, the generator model, improved with the various features described herein, may be put to use to improve the training of the further machine learnable model, e.g., an image classifier, and finally obtain more accurate model outputs, e.g., classifications. The further machine learnable model does not need to be a classification or regression model, e.g., the training dataset may be used for unsupervised learning, in which case obtaining labels may not be needed.

Optionally, the generator model may be trained to impute missing components to complete a partial instance. Given such a trained generator model, a partial instance may be obtained, and the generator model may be applied to this partial instance to obtain a completion of the partial instance. Techniques for data imputation using GANs are known per se in the art may be readily adapted to work with generator models and discriminator models as described herein. The imputation may be performed by the same system that has trained the generator model, for example, or a data imputation system may obtain a generator model trained as described herein and use the trained generator model to perform the imputation. For example, a partial instance may comprise data obtained from one or more sensors, wherein data for one or more other sensors, or particular data points for the sensors, are missing, the partial instance being completed by providing estimates for the missing data. For example, data imputation may be used in an automotive perception system to complete a 360-degree view around a vehicle, etcetera.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a system for training a generator model;
Fig. 2 shows a detailed example of how to train and/or apply a generator model and a discriminator model;
Fig. 3 shows a computer-implemented method of training a generator model;
Fig. 4 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

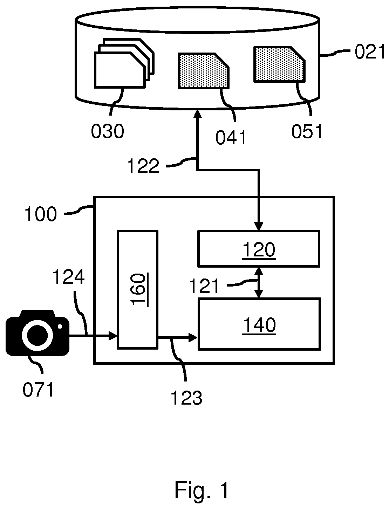

Fig. 1 shows a system 100 for training a generator model. The generator model is configured to generate synthetic instances. A discriminator model is configured to determine discriminator scores for input instances. A discriminator score for an input instance indicates whether the input instance is a synthetic instance or an actual instance. The discriminator model is configured to additionally determine a confidence score of the discriminator score of the input instance. The system 100 may comprise a data interface 120 and a processor subsystem 140 which may internally communicate via data communication 121. Data interface 120 may be for accessing data representing a set of actual instances 030, parameters 041 of the generator model and parameters 051 of the discriminator model. The data may be used for in by the same or other systems, for instance, to generate synthetic instances for training a machine learnable model, as described herein.

The processor subsystem 140 may be configured to, during operation of the system 100 and using the data interface 120, access data 030, 041, 051. For example, as shown in Fig. 1, the data interface 120 may provide access 122 to an external data storage 021 which may comprise said data 030, 041, 051. Alternatively, the data 030, 041, 051 may be accessed from an internal data storage which is part of the system 100. Alternatively, the data 030, 041, 051 may be received via a network from another entity. In general, the data interface 120 may take various forms, such as a network interface to a local or wide area network, e.g., the Internet, a storage interface to an internal or external data storage, etc. The data storage 020 may take any known and suitable form.

Processor subsystem 140 may be configured to, during operation of the system 100 and using the data interface 120, learn the parameters of the generator model and the discriminator model by repeatedly training the discriminator model using the generator model and the set of actual instances and training the generator model using the discriminator model. The generator model may be trained by optimizing a first objective function encouraging generation of synthetic instances which the discriminator model determines to be actual instances. The first objective function may further encourage high confidence for generated instances determined to be actual instances, and low confidence for generated instances determined to be synthetic instances. Instead or in addition, the discriminator model may be trained by optimizing a second objective function encouraging correct determination whether input instances are synthetic instances or actual instances. The second objective function may further encourage high confidence for correct determinations and low confidence for incorrect determinations.

Processor subsystem 140 may also be configured to use a trained generator model, for example, to generate one or more synthetic instances using the trained generator model for use in training a further machine learnable model, or to apply a generator model which is trained to impute missing components, to obtain a completion of the partial instance. In

EP 3 796 220 B1

these cases, processor subsystem 140 does not necessarily train the generator model and/or discriminator model itself but may instead obtain a trained generator model. No access to training data 030 may be needed in such cases. Processor subsystem 140 may also be configured to train this further machine learnable model using at least the one or more generated synthetic instances. In this case, processor subsystem 140 does not necessarily train the generator model or generate the synthetic instances itself, but may instead obtain a trained generator model or generated synthetic instances.

As an optional component, the system 100 may comprise an image input interface 160 or any other type of input interface for obtaining sensor data 124 from a sensor, such as a camera 071. Processor subsystem 140 may be configured to determine set of actual instances 030 from the sensor data 124. For example, the camera may be configured to capture image data 124, processor subsystem 140 being configured to determine store the image data 124 obtained, via data communication 123, from input interface 160, as actual instances 030. The input interface may be configured for various types of sensor signals, e.g., video signals, radar/LiDAR signals, ultrasonic signals, etc. Data can be obtained from multiple sensors, optionally also of multiple sensor types, for example, for data imputation purposes. The sensor(s) may be part of system 100.

As an optional component, the system 100 may comprise an actuator interface (not shown) for providing, to an actuator, actuator data causing the actuator to effect an action in an environment of system 100. For example, processor subsystem 140 may be configured to determine the actuator data based at least in part on a partial instance from which missing components are imputed using a generator model as described herein, or based in part on outputs of a machine learnable model trained using synthetic data generated by a generator model, as described herein. There can be one or more actuators from known types such as electric, hydraulic, pneumatic, thermal, magnetic and/or mechanical actuator. The actuator(s) may be part of system 100.

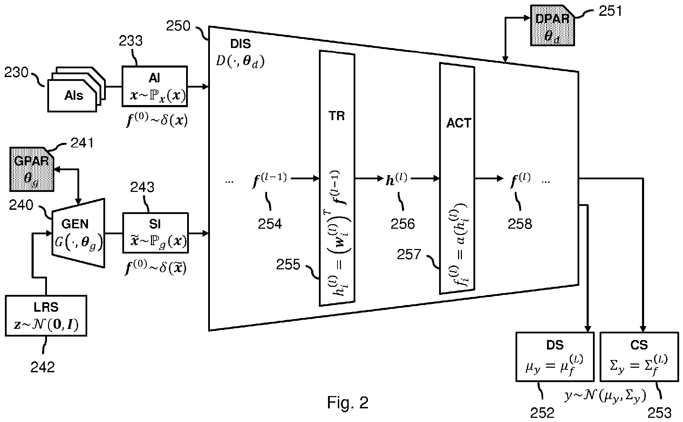

Various details and aspects of the operation of the system 100 will be further elucidated with reference to Fig. 2, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a nonvolatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a detailed yet non-limiting example of how a generator model and a discriminator model may be trained and/or applied. Shown in the figure is are a generator model **GEN,** 240, and a discriminator model **DIS,** 250, together forming a Generative Adversarial Network (GAN).

Generator model **GEN** is configured to generate a synthetic instance **SI,** 243, from sample **LRS,** 242, sampled from a probability distribution, e.g., $z \in \mathcal{Z}$. As shown in the figure, the probability distribution $p_z(z)$ may be a normal distribution, in particular a standard normal distribution, but this is not necessary, e.g., the probability distribution can also be a uniform distribution. Preferably though, a distribution is chosen from which sample **LRS** can be sampled relatively efficiently. Applying the, generally non-linear, transformation of the generator model **GEN** may lead to an induced distribution $\mathbb{P}_g(x)$ on the same sample space $x \in \mathcal{X}$ as a set of actual instances **AIs,** 230, typically observed data. For example, an instance $x \in \mathcal{X}$, e.g., represented as a real-valued vector, may represent an image or other type of sensor data. Various known architectures for the generator model **GEN** may be used, although architectures supporting gradient based optimization are preferred for efficiency reasons. The generator model **GEN** may be trained by optimizing a first objective function encouraging generation of synthetic instances **SI** which the discriminator model **DIS** determines to be actual instances, in other words, to synthesize realistically looking samples $\tilde{x} \sim \mathbb{P}_g(x)$. Effectively, the first objective function may be encouraged to minimize a proximity measure between its induced distribution and the target one

$$d(\mathbb{P}_g(x), \mathbb{P}_x(x))$$
.

Discriminator model **DIS** is configured to determine discriminator scores **DS,** 252, for input instances $x \in \mathcal{X}$, for example, actual instances **AI,** 233, sampled from set **AIs,** or synthetic instances **SI.** A discriminator score **DS** for an input instance indicates whether the input instance is a synthetic instance or an actual instance. As an example, it is assumed below that high discriminator scores indicate actual instances and low discriminator scores indicate synthetic instances, although the opposite is of course possible as well.

Discriminator model **DIS** may be trained by optimizing a second objective function encouraging correct determination whether input instances are synthetic instances or actual instances. Effectively, two objectives may be identified for discriminator models: to learn a suitable proximity measure between the distribution $\mathbb{P}_g(x)$ of synthetic instances **SI** and $\mathbb{P}_x(x)$ of actual instances **AI**, e.g., based on a subset of samples obtained from each distribution, and to transfer that knowledge to the generator model **GEN.** These two objectives may translate into a training process in which parameters **GPAR,** 241, of the generator model and parameters **DPAR,** 251, of the discriminator model are learned by repeatedly training the discriminator model **DIS** using the generator model **GEN** and the set of actual instances **AIs** and training the generator model **GEN** using the discriminator model **DIS.** Training the discriminator model **DIS** may be referred to as the "discriminative phase" of training and training the generator model **GEN** may be referred to as the "generative phase" of training.

In various existing GAN architectures, a discriminator model does not determine a confidence score. In such known GAN architectures, the two training phases may be implemented as follows. In the discriminative phase, the discriminator model minimizes a loss function $\mathcal{L}_D(\boldsymbol{\theta}_d) = -\mathbb{E}_{x \sim \mathbb{P}_x(x)}[\log(D(x;\ \boldsymbol{\theta}_d))] - \mathbb{E}_{x \sim \mathbb{P}_g(x)}[\log(1 - D(x;\ \boldsymbol{\theta}_d))]$ with respect to its parameters $\theta_d$ in order to learn a proximity measure between the two distributions based on samples drawn from each. In the generative phase, the generator model aims to minimize a loss

$$\mathcal{L}_G(\boldsymbol{\theta}_g) = \mathbb{E}_{x \sim \mathbb{P}_g(x)}[\log(1 - D(x;\ \boldsymbol{\theta}_d)] = \mathbb{E}_{z \sim \mathbb{P}_z(z)}[\log(1 - D(G(z;\ \boldsymbol{\theta}_g);\ \boldsymbol{\theta}_d))]$$ with respect to its

parameters $\theta_g$. As an alternative, a loss $\mathcal{L}_G = -\mathbb{E}_{z \sim \mathbb{P}_z(z)}[\log(D(G(z;\ \boldsymbol{\theta}_g);\ \boldsymbol{\theta}_d))]$ is sometimes used. Interestingly, however, discriminator model **DIS** is configured to determine confidence score **CS,** 253, of the discriminator score **DS** of the input instance. The first and second objective functions used to train the generator model **GEN** and the discriminator model **DIS,** respectively, may be based at least in part on this confidence score **CS.** Confidence score **CS** is a variance of the discriminator output **DS.** For example, a high value for confidence score **CS** may indicate a high variance and thus a low confidence. A low value for confidence score **CS** may indicate a low variance and thus a high confidence. However, other known ways of indicating confidence may also be used.

Various discriminator models **DIS** that can output confidence scores **CS** will be envisaged by the skilled person. For example, the confidence score may simply be an additional output of a regular, non-Bayesian machine learnable model, such as a neural network, a convolutional neural network, etc. In various cases, generator model **GEN** is trained wherein the first objective function encourages high confidence for generated instances determined to be actual instances, and low confidence for generated instances determined to be synthetic instances. Similarly, discriminator model **DIS** may be trained wherein the second objective function encourages high confidence for correct determinations and low confidence for incorrect determinations, e.g., high confidence for outputting a discriminator score **DS** indicating that an input instance is synthetic when performed on a synthetic instance **SI** and for outputting a discriminator score **DS** indicating that an input instance is actual when performed on an actual instance **AI**, and low confidence for the opposite cases of determining actual instances to be synthetic and synthetic instances to be actual.

Discriminator model **DIS** is Bayesian model determining parameters of a probability distribution for the model output. Discriminator score **DS** is a mean and confidence score **CS** is a variance, etc. Shown in the figure is a discriminator model **DIS** comprising a Bayesian neural network (BNN). In such a BNN, a weight between a first and a second neuron of the BNN is defined by a probability distribution. Various known BNN architectures may be used, e.g., the first and second neurons may be comprised in subsequent layers of the BNN, in cases where the BNN uses a layer-based architecture comprising multiple layers. In these cases, training the discriminator model comprises learning parameters of the probability distribution, as comprised in set of parameters **DPAR.**

For example, the figure highlights an *l*th layer of a BNN-type discriminator model **DIS.**

The layer may determine an output of a neuron by applying an activation function to an activation signal. The activation signal may be based on a product of a weight between the neuron and another neuron, and an output of that other neuron. Shown in the figure are input neurons $f^{(l-1)}$, 254 of the *l*th layer, in other words, the output signal of the previous layer. The activation signals $\boldsymbol{h}^{(l)}$, 256, for neurons in the layer may be computed in an affine transformation sub-layer **TR,** 255, based on these input neurons, e.g., as

$$h_i^{(l)} = \left(\boldsymbol{w}_i^{(l)}\right)^T \boldsymbol{f}^{(l-1)},$$

where the weights and biases $\boldsymbol{w}_i^{(l)}$ for the ith neuron in the *l*th layer are stochastic parameters. For example, the probability distribution of a weight may be a Gaussian distribution:

$$w_{(i,j)}^{(l)} \sim p_{(i,j)}(w) = \mathcal{N}(\mu_{(i,j),w}^{(l)}, \Sigma_{(i,j),w}^{(l)}).$$

Other probability distributions, such as truncated Gaussian distributions, are possible as well. It is also not necessary for each neuron to have the same probability distribution. The output $f^{(l)}$, 258, of the layer may be determined by applying, in an activation sub-layer **ACT**, 257, an activation function $a(\cdot)$ to respective activation signals. The activation function is typically non-linear, e.g., a rectified linear unit, a hyperbolic tangent, or a sigmoid.

Interestingly, the Bayesian neural network is evaluated on an input instance by determining mean $\mathbb{E}\left[f_i^{(l)}\right]$ and variance $\mathbb{E}\left[\left(f_i^{(l)}\right)^2\right]$ of the output signal of a neural network layer based on the parameters of the probability distributions at that layer, and the means and variances of the inputs of that layer. Specifically, the mean and variance of the activation signal may be determined, and the mean and variance of the layer outputs may be determined therefrom. In particular, this computation may be performed without sampling neural network layer inputs, outputs, or weights, providing a particularly efficient way of evaluating the BNN.

For example, as discussed, the activation signal computed by transformation **TR** may be an inner product of respective weights and outputs of neurons of the BNN at the previous layer. Accordingly, the activation signal may be a sum of multiple random variables $\left(w_{(i,j)}^{(l)}\right)^T f_j^{(l-1)}$. Especially if multiple such random variables are summed together, e.g., at least five or at least ten, the activation signal may be accurately approximated, according to the Lyapunov Central Limit Theorem (CLT) and assuming independence, as a normal distribution, e.g.:

$$h_i^{(l)} \overset{!}{\sim} \mathcal{N}\left(\mu_{i,h}^{(l)}, \Sigma_{i,h}^{(l)}\right).$$

Such a normal distribution is entirely defined via its first two moments $\mu_{i,h}^{(l)}$ and $\Sigma_{i,h}^{(l)}$, so moment matching may be used to determine the mean and variance. For example, assuming that the weights at a particular layer are normally distributed, the mean and variance of the activation signal may be computed as follows:

$$\mu_{i,h}^{(l)} \leftarrow \left(\boldsymbol{\mu}_{i,w}^{(l)}\right)^T \mathbb{E}\left[\boldsymbol{f}^{(l-1)}\right]$$

for the first moment and

$$\Sigma_{i,h}^{(l)} \leftarrow \sum_j \mathbb{V}\left[f_j^{(l-1)}\right]\left(\Sigma_{(i,j),w}^{(l)}\right) + \mathbb{V}\left[f_j^{(l-1)}\right]\left(\mu_{(i,j),w}^{(l)}\right)^2 + \mathbb{E}\left[f_j^{(l-1)}\right]^2\left(\Sigma_{(i,j),w}^{(l)}\right)$$

for the second central moment. It is noted that, as a model assumption, random variables $w_{i,h}^{(l)} \perp \boldsymbol{f}^{(l-1)}$ may be assumed to be independent and covariance matrices $\mathbb{V}[\boldsymbol{f}^{(l-1)}]$ and $\mathbb{V}[\boldsymbol{w}_i^{(l)}]$ may be assumed to be diagonal.

Having computed the mean and variance of an activation signal, the mean and the variance of a neuron output, resulting from applying an activation function $a(\cdot)$, may be determined therefrom. For example, the first two moments of the output signal may be estimated as

$$\mathbb{E}\left[f_i^{(l)}\right] = \int a(h_i^{(l)}) p(h_i^{(l)}) dh_i^{(l)},$$

$$\mathbb{E}\left[\left(f_i^{(l)}\right)^2\right] = \int a\left(\left(h_i^{(l)}\right)^2\right) p(h_i^{(l)}) dh_i^{(l)}.$$

For common activation functions such as rectified linear units, hyperbolic tangents, or logistic sigmoidal activations, it is feasible to perform these estimations.

Accordingly, it has been described how moments of a layer output of a BNN may be determined from the moments of the output of the preceding layer. These moments of the preceding layer output may in turn be determined by recursively performing the above procedure until the first layer $f^{(0)}$. For the first layer, for example, a Dirac delta distribution may be assumed with a zero-variance and a mean following the input instances $f^{(0)} \overset{!}{\sim} \delta(x)$.

Accordingly, at the final layer of the BNN, the output of the network may be given as $y = D(x; \theta_d) \overset{!}{\sim} \mathcal{N}(\mu_y, \Sigma_y) = \mathcal{N}(\mu_f^{(L)}, \Sigma_f^{(L)})$. The final-layer mean $\mu_y$ provides a discriminator score **DS,** similar to the normal expected output of a standard GAN architecture. The final-layer variance $\Sigma_y$ provides confidence score **CS** in the form of an uncertainty measure representing a confidence of discriminator model **DIS** network in its predicted output **DS.**

In order to utilize the confidence score **CS** in the objective function, e.g., resulting in various discussed advantages such as stabilizing training dynamics and speeding up convergence, a probability of discriminator model **DIS** classifying an input instance a synthetic instance **SI** or as an actual instance **AI** may generally be determined as a function of the discriminator score **DS** and the confidence score **CS.** The first objective function for training the generator model **GEN** and/or the second objective function for training the discriminator model **DIS** may be based on this probability.

Since the discriminator score **DS,** $\mu_y$, and confidence score **CS,** $\Sigma_y$, represent a mean and a standard deviation of the output of the discriminator model, respectively, the objective functions may for example be phrased as follows. Suppose a logistic sigmoidal, softmax, or similar non-linear activation is applied to the output y. Based on assuming a Bernoulli likelihood, the following first objective function may be used to train the generator model **GEN:**

$$\mathcal{L}_G = \mathbb{E}_{x \sim \mathbb{P}_g(x)}\left[\log\left[1 + \Gamma\left(\frac{1}{\sqrt{2}}\frac{\mu_y}{\sqrt{1+\Sigma_y}}\right)\right]\right],$$

with $\Gamma(\cdot)$ being the error function and log representing a natural logarithm. Similarly, the second objective function for training the discriminator model **DIS** may be estimated in a closed form as

$$\mathcal{L}_D = \underbrace{\mathbb{E}_{x \sim \mathbb{P}_x(x)}\left[\log\left[1 + \Gamma\left(\frac{1}{\sqrt{2}}\frac{\mu_y}{\sqrt{1+\Sigma_y}}\right)\right]\right]}_{\mathcal{L}_D^x} + \underbrace{\mathbb{E}_{x \sim \mathbb{P}_g(x)}\left[\log\left[1 + \Gamma\left(\frac{1}{\sqrt{2}}\left(1 - \frac{\mu_y}{\sqrt{1+\Sigma_y}}\right)\right)\right]\right]}_{\mathcal{L}_D^g}.$$

Training typically involves repeatedly training the discriminator model **DIS** using the generator model **GEN** and the set of actual instances **AIs** and training the generator model **GEN** using the discriminator model **DIS.** For example, an iteration may involve first training the discriminator model **DIS** on one more actual instances **AI** and/or one or more synthetic instances **SI,** e.g., by evaluating the second objective function and updating the parameters **DPAR** of the discriminator model **DIS** to optimize the second objective function, e.g., using known gradient-based approaches such as Adam. Typically, a minibatch comprising multiple actual instances and multiple synthetic instances is used. Next, the generator model **GEN** may be trained, e.g., by evaluating the first objective function and updating the parameters **GPAR** of the generator model **GEN** to optimize the first objective function, e.g. using the same gradient-based approaches. The same synthetic instance(s) used to train the discriminator model **DIS** may be used, or different synthetic instance(s). Various alternatives will be envisaged by the skilled person, including first training the generator model **GEN** and then training the discriminator model **DIS;** performing multiple optimizations on the discriminator model **DIS** and/or on the generator model **GEN** in a single iteration, etc. Instead of or in addition to using the confidence score **CS** in the objective functions, the confidence score may also be used to evaluate a stopping criterion for the repeated training of the discriminator model and the generator model. For example, training may stop if the average confidence score is high enough, e.g., the average variance is below a stopping threshold, for actual samples, for synthetic samples, or for both. The stopping threshold may be chosen adaptively, e.g., based on the current iteration count.

A detailed example of training generator model **GEN** and discriminator model **DIS,** being a Bayesian neural network, is now given as pseudocode to illustrate various aspects described herein. This example shows an example of learning parameters $\theta_d$, **DPAR** of discriminator model **DIS** and parameters $\theta_g$, **GPAR,** of generator model **GEN** by repeatedly training the two models:

---

**Algorithm 1.** GAN Training Framework with Bayesian Discriminator Model

---

**procedure** CLT-GAN(dataset of actual instances **AIs**: $\{x_n^N\}_n$, batch size: $N_b$, stopping threshold: $\lambda_y$, learning rate: $\eta$, hyperpriors: $p\left(\mu_{(i,j),w}^{(l)}\right)$, $p\left(\Sigma_{(i,j),w}^{(l)}\right)$, activation function: $a(\cdot)$

   initialize $\mu_{(i,j),w}^{(l)} \sim p\left(\mu_{(i,j),w}^{(l)}\right)$

   initialize $\Sigma_{(i,j),w}^{(l)} \sim p\left(\Sigma_{(i,j),w}^{(l)}\right)$

   **while** $(\Sigma_y > \lambda_y)$ or (max # iterations) **do**// *use confidence score as stopping criterion*

   draw a batch of actual instances: $\{x_n\}_{n=1}^{N_b} \overset{\text{iid}}{\sim} \mathbb{P}_x(x)$

   let: $\left\{(\mu_{y_n}, \Sigma_{y_n}) = D(x_n)\right\}_{n=1}^{N_b}$

   estimate: $\mathcal{L}_D^x \leftarrow \sum_{n=1}^{N_b} \log\left[1 + \Gamma\left(\frac{1}{\sqrt{2}} \frac{\mu_{y_n}}{\sqrt{1+\Sigma_{y_n}}}\right)\right]$

   draw latent variable samples: $\{z_n\}_{n=1}^{N_b} \overset{\text{iid}}{\sim} p_z(z)$

   synthesize synthetic instances: $\{\tilde{x}_n = G(z_n)\}_{n=1}^{N_b} \overset{\text{iid}}{\sim} \mathbb{P}_g(x)$

   let: $\left\{(\mu_{y_n}, \Sigma_{y_n}) = D(\tilde{x}_n)\right\}_{n=1}^{N_b}$

   estimate: $\mathcal{L}_D^g \leftarrow \sum_{n=1}^{N_b} \log\left[1 + \Gamma\left(\frac{1}{\sqrt{2}}\left(1 - \frac{\mu_{y_n}}{\sqrt{1+\Sigma_{y_n}}}\right)\right)\right]$

   // *second objective function*

   update: $\boldsymbol{\theta}_d \leftarrow \boldsymbol{\theta}_d + \eta \, \nabla_{\boldsymbol{\theta}_d}(\mathcal{L}_D^x + \mathcal{L}_D^g)$

   // *train discriminator model*

   let: $\left\{(\mu_{y_n}, \Sigma_{y_n}) = D(\tilde{x}_n)\right\}_{n=1}^{N_b}$

   estimate: $\mathcal{L}_G \leftarrow \sum_{n=1}^{N_b} \log\left[1 + \Gamma\left(\frac{1}{\sqrt{2}} \frac{\mu_{y_n}}{\sqrt{1+\Sigma_{y_n}}}\right)\right]$

   // *first objective function*

   update: $\boldsymbol{\theta}_g \leftarrow \boldsymbol{\theta}_g + \eta \, \nabla_{\boldsymbol{\theta}_g}\mathcal{L}_D^g$

   // *train generator model*

   **end while**

   **end procedure**

---

A detailed example of evaluating a discriminator model **DIS,** in this case a Bayesian neural network, to determine discriminator scores $\mu_{y_n}$, **DS,** and confidence scores $\Sigma_{y_n}$, **CS,** for a batch of input instances, is now given as pseudocode to illustrate various aspects described herein.

---

**Algorithm 2.** Bayesian Discriminator Model

---

**procedure** D(batch: $\left\{x_n^{N_b}\right\}_n$, activation Function: $a(\cdot)$)

let: $\{f_n^{(0)} \sim \delta(x_n)\}$ with $\mathbb{E}\left[f_n^{(0)}\right] = x_n$ and $\mathbb{V}\left[f_n^{(0)}\right] = 0.$

**for** $l \leftarrow 1$ to $L$ and $n \leftarrow 1$ to $N_b$ **do**          *// BNN with L layers*

let: $h_i^{(l)} \sim \mathcal{N}\left(\mu_{i,h}^{(l)}, \Sigma_{i,h}^{(l)}\right)$

estimate: $\mu_{i,h}^{(l)} \leftarrow \left(\boldsymbol{\mu}_{i,w}^{(l)}\right)^T \mathbb{E}\left[f^{(l-1)}\right] = \Sigma_j \left(\mu_{(i,j),w}^{(l)}\right) \mathbb{E}\left[f_j^{(l-1)}\right]$

*// mean of act. signal*

estimate: $\Sigma_{i,h}^{(l)} \leftarrow \Sigma_j \mathbb{V}\left[f_j^{(l-1)}\right]\left(\Sigma_{(i,j),w}^{(l)}\right) + \mathbb{V}\left[f_j^{(l-1)}\right]\left(\mu_{(i,j),w}^{(l)}\right)^2 + \mathbb{E}\left[f_j^{(l-1)}\right]^2 \left(\Sigma_{(i,j),w}^{(l)}\right)$

*// variance of activation signal*

estimate: $\mathbb{E}\left[f_i^{(l)}\right] = \int a(h_i^{(l)})p(h_i^{(l)})dh_i^{(l)}$

*// mean of layer outputs*

estimate: $\mathbb{E}\left[\left(f_i^{(l)}\right)^2\right] = \int a\left(\left(h_i^{(l)}\right)^2\right)p(h_i^{(l)})dh_i^{(l)}$

estimate: $\mathbb{V}\left[\left(f_i^{(l)}\right)^2\right] = \mathbb{E}\left[\left(f_i^{(l)}\right)^2\right] - \mathbb{E}\left[f_i^{(l)}\right]^2$

*// variance of layer outputs*

**end for**

let: $\left\{y_n = D(x_n) \stackrel{!}{\sim} \mathcal{N}(\mu_{y_n}, \Sigma_{y_n}) = \mathcal{N}\left(\mathbb{E}\left[f_i^{(l)}\right], \mathbb{V}\left[\left(f_i^{(l)}\right)^2\right]\right)\right\}_n^{N_b}$

**return** $(\mu_{y_n}, \Sigma_{y_n})$

Generator model **GEN** may be used to generate one or more synthetic instances **SI** for use in training a further machine learnable model (not shown). The further machine learnable model may be trained using at least the one or more generated synthetic instances **SI** according to various techniques know in the art per se.

The techniques highlighted in this figure may also be used to train generator model **GEN** to impute missing components to complete a partial instance. For example, the training process may be adapted as disclosed in J. Yoon et al., "GAIN: Missing Data Imputation using Generative Adversarial Nets" (available at https://arxiv.org/abs/1806.02920). The generator model **GEN** may then be applied on a partial instance to obtain a completion of the partial instance as described in the reference.

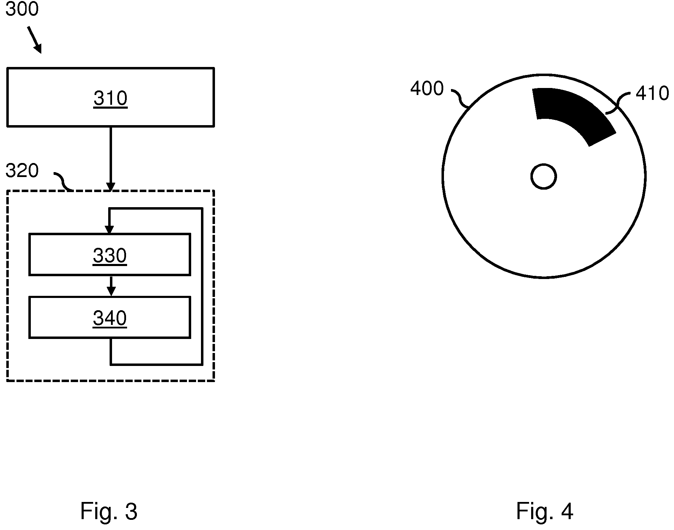

**Fig. 3** shows a block-diagram of computer-implemented method 300 of training a generator model. The generator model may be configured to generate synthetic instances. The discriminator model is configured to determine discriminator scores for input instances. A discriminator score for an input instance indicates whether the input instance is a synthetic instance or an actual instance. The discriminator model is configured to additionally determine a confidence score of the discriminator score of the input instance. The method 300 may correspond to an operation of the system 100 of Fig. 1. However, this is not a limitation, in that the method 300 may also be performed using another system, apparatus or device. The method 300 may comprise, in an operation titled "ACCESSING ACTUAL INSTANCES, PARAMETERS", accessing 310 a set of actual instances and parameters of the generator model and of the discriminator model. The method 300 may also comprise, in an operation titled "LEARNING PARAMETERS", learning 320 the parameters of the generator model and the discriminator model by repeatedly training the discriminator model using the generator model and the set of actual instances and training the generator model using the discriminator model. Operation 320 may comprise an operation titled "TRAINING GENERATOR MODEL BASED ON CONFIDENCE OF DISCRIMINATOR MODEL", of training the generator model 330 by optimizing a first objective function encouraging generation of synthetic instances which the discriminator model determines to be actual instances. The first objective function may further encourage high confidence for generated instances determined to be actual instances, and low confidence for generated instances determined to be synthetic instances. Instead of on addition to operation 330, operation 320 may comprise an operation titled "TRAINING DISCRIMINATOR MODEL INCLUDING CONFIDENCE", training the discriminator model 340 by optimizing a second objective function encouraging correct determination whether input instances are synthetic instances or actual instances. The second objective function may further encourage high confidence for correct determinations and low confidence for incorrect determinations.

It will be appreciated that, in general, the operations of method 300 of Fig. 3 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 4,** instructions for the computer, e.g., executable code, may be stored on a computer readable medium 400, e.g., in the form of a series 410 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 4 shows an optical disc 400.

**Claims**

1. A computer-implemented method (300) of training a generator model, wherein the generator model is configured to generate synthetic instances and a discriminator model is configured to determine discriminator scores for input instances, a discriminator score for an input instance indicating whether the input instance is a synthetic instance or a non-synthetic instance, wherein the discriminator model is configured to additionally determine a confidence score of the discriminator score of the input instance, wherein the confidence score indicates a confidence of the discriminator model in a prediction given by the discriminator score based on the input instance, wherein the discriminator model comprises a Bayesian neural network (BNN), wherein a weight between a first and a second neuron of the BNN is defined by a probability distribution, training the discriminator model comprising learning the weight, the BNN providing a probability distribution for the discriminator output, where the discriminator score is a mean of the probability distribution and the confidence score is a variance of the probability distribution, the computer-implemented method comprising the steps of:

   - accessing (310) a set of non-synthetic instances and parameters of the generator model and of the discriminator model; and
   - learning (320) the parameters of the generator model and of the discriminator model by repeatedly training the discriminator model using the generator model and the set of non-synthetic instances and training the generator model using the discriminator model, comprising:

      - training the generator model (330) by optimizing a first objective function rewarding generation of synthetic instances which the discriminator model determines to be non-synthetic instances, wherein the first objective function further rewards high confidence for generated instances determined to be non-synthetic instances, and low confidence for generated instances determined to be synthetic instances; and
      - training the discriminator model (340) by optimizing a second objective function rewarding correct determination whether input instances are synthetic instances or non-synthetic instances, wherein the second objective function further rewards high confidence for correct determinations and low confidence for incorrect determinations, wherein the synthetic instances, input instances, and non-synthetic instances are images.

2. Method (300) according to claim 1, comprising determining a probability of the discriminator model classifying an input instance as synthetic instance or as a non-synthetic instance, the probability being a function of the discriminator score and the confidence score, and defining the first objective function and/or the second objective function based on the probability.

3. Method (300) according to claim 1, wherein an output of the second neuron is defined by applying an activation function to an activation signal, the activation signal being based on the product of said weight and the output of the first neuron, the method comprising determining a mean and a variance of the activation signal based on said weight and a mean and a variance of the output of the first neuron, and determining a mean and a variance of the output of the second neuron based on the mean and the variance of the output of the first neuron.

4. Method (300) according to claim 3, wherein the activation function comprises one or more of a rectified linear unit, a hyperbolic tangent, and a sigmoid.

5. Method (300) according to claim 3 or 4, wherein the activation signal comprises at least five products of respective weights and outputs of neurons of the BNN.

6. Method (300) according to any one of claims 1, or 3 to 5, wherein the probability distribution is a Gaussian distribution or a truncated Gaussian distribution.

7. Method (300) according to any one of the preceding claims, further comprising evaluating a stopping criterion for the repeated training of the discriminator model and the generator model based at least in part on confidence scores determined during said training.

8. Method (300) according to any one of the preceding claims, further comprising generating one or more synthetic instances using the trained generator model, and using the generated synthetic instances for training a further machine learnable model.

9. Method (300) according to claim 8, further comprising training the further machine learnable model using at least the one or more generated synthetic instances.

10. Method (300) according to any one of the preceding claims, wherein the generator model is trained to provide missing components to complete a partial instance, the method further comprising obtaining a partial instance and applying the generator model to obtain a completion of the partial instance.

11. A system (100) for training a generator model, wherein the generator model is configured to generate synthetic instances and a discriminator model is configured to determine discriminator scores for input instances, a discriminator score for an input instance indicating whether the input instance is a synthetic instance or a non-synthetic instance, wherein the discriminator model is configured to additionally determine a confidence score of the discriminator score of the input instance, wherein the confidence score indicates a confidence of the discriminator model in a prediction given by the discriminator score based on the input instance, wherein the discriminator model comprises a Bayesian neural network (BNN), wherein a weight between a first and a second neuron of the BNN is defined by a probability distribution, training the discriminator model comprising learning the weight, the BNN providing a probability distribution for the discriminator output, where the discriminator score is a mean of the probability distribution and the confidence score is a variance of the probability distribution, the system comprising:

- a data interface (120) for accessing data representing a set of non-synthetic instances (030) and parameters of the generator model (041) and of the discriminator model (042); and
- a processor subsystem (140) configured to learning the parameters of the generator model and of the discriminator model by repeatedly training the discriminator model using the generator model and the set of non-synthetic instances and training the generator model using the discriminator model, comprising:

  - training the generator model by optimizing a first objective function rewarding generation of synthetic instances which the discriminator model determines to be non-synthetic instances, wherein the first objective function further rewards high confidence for generated instances determined to be non-synthetic instances, and low confidence for generated instances determined to be synthetic instances; and
  - training the discriminator model by optimizing a second objective function rewarding correct determination whether input instances are synthetic instances or non-synthetic instances, wherein the second objective function further rewards high confidence for correct determinations and low confidence for incorrect determinations, wherein the synthetic instances, input instances, and non-synthetic instances are images.

12. System (100) according to claim 11, wherein the processor subsystem is further configured to generate one or more synthetic instances using the trained generator model and to output the generated one or more synthetic instances for use in training a further machine learnable model.

13. A computer-readable medium (400) comprising data (410) representing instructions which, when executed by a processor system, cause the processor system to perform the computer-implemented method according to any one of claims 1 to 10.

## EP 3 796 220 B1

**Patentansprüche**

1. Computer-implementiertes Verfahren (300) zum Trainieren eines Generatormodells, wobei das Generatormodell dazu ausgelegt ist, synthetische Instanzen zu erzeugen, und ein Diskriminatormodell dazu ausgelegt ist, Diskriminatorbewertungen für Eingabeinstanzen zu bestimmen, wobei eine Diskriminatorbewertung für eine Eingabeinstanz angibt, ob die Eingabeinstanz eine synthetische Instanz oder eine nicht-synthetische Instanz ist, wobei das Diskriminatormodell dazu ausgelegt ist, zusätzlich einen Konfidenzwert der Diskriminatorbewertung der Eingangsinstanz zu bestimmen, wobei der Konfidenzwert eine Konfidenz des Diskriminatormodells in einer Vorhersage angibt, die durch die Diskriminatorbewertung basierend auf der Eingabeinstanz gegeben wird, wobei das Diskriminatormodell ein Bayessches neuronales Netzwerk (BNN) umfasst, wobei eine Gewichtung zwischen einem ersten und einem zweiten Neuron des BNN durch eine Wahrscheinlichkeitsverteilung definiert ist, wobei das Trainieren des Diskriminatormodells Lernen der Gewichtung umfasst, wobei das BNN eine Wahrscheinlichkeitsverteilung für die Diskriminatorausgabe bereitstellt, wobei die Diskriminatorbewertung ein Mittelwert der Wahrscheinlichkeitsverteilung ist und der Konfidenzwert eine Varianz der Wahrscheinlichkeitsverteilung ist, wobei das computer-implementierte Verfahren die folgenden Schritte umfasst:

   - Zugreifen (310) auf einen Satz nicht-synthetischer Instanzen und Parameter des Generatormodells und des Diskriminatormodells; und
   - Lernen (320) der Parameter des Generatormodells und des Diskriminatormodells durch wiederholtes Trainieren des Diskriminatormodells unter Verwendung des Generatormodells und des Satzes von nicht-synthetischen Instanzen und Trainieren des Generatormodells unter Verwendung des Diskriminatormodells, umfassend:

      - Trainieren des Generatormodells (330) durch Optimieren einer ersten Zielfunktion, die die Erzeugung synthetischer Instanzen belohnt, die das Diskriminatormodell als nicht-synthetische Instanzen bestimmt, wobei die erste Zielfunktion ferner eine hohe Konfidenz für erzeugte Instanzen vergibt, die als nicht-synthetische Instanzen bestimmt wurden, und eine geringe Konfidenz für erzeugte Instanzen vergibt, die als synthetische Instanzen bestimmt wurden; und
      - Trainieren des Diskriminatormodells (340) durch Optimieren einer zweiten Zielfunktion, die eine korrekte Bestimmung belohnt, ob Eingabeinstanzen synthetische Instanzen oder nicht-synthetische Instanzen sind, wobei die zweite Zielfunktion ferner eine hohe Konfidenz für korrekte Bestimmungen und eine geringe Konfidenz für falsche Bestimmungen vergibt, wobei die synthetischen Instanzen, Eingabeinstanzen und nicht-synthetischen Instanzen Bilder sind.

2. Verfahren (300) nach Anspruch 1, umfassend Bestimmen einer Wahrscheinlichkeit, dass das Diskriminatormodell eine Eingabeinstanz als synthetische Instanz oder als eine nicht-synthetische Instanz klassifiziert, wobei die Wahrscheinlichkeit eine Funktion der Diskriminatorbewertung und des Konfidenzwerts ist, und Definieren der ersten Zielfunktion und/oder der zweiten Zielfunktion basierend auf der Wahrscheinlichkeit.

3. Verfahren (300) nach Anspruch 1, wobei eine Ausgabe des zweiten Neurons durch Anwenden einer Aktivierungsfunktion auf ein Aktivierungssignal definiert wird, wobei das Aktivierungssignal auf dem Produkt der Gewichtung und der Ausgabe des ersten Neurons basiert, wobei das Verfahren Bestimmen eines Mittelwerts und einer Varianz des Aktivierungssignals basierend auf der Gewichtung und einem Mittelwert und einer Varianz der Ausgabe des ersten Neurons und Bestimmen eines Mittelwerts und einer Varianz der Ausgabe des zweiten Neurons basierend auf dem Mittelwert und der Varianz der Ausgabe des ersten Neurons umfasst.

4. Verfahren (300) nach Anspruch 3, wobei die Aktivierungsfunktion eine gleichgerichtete lineare Einheit und/oder eine hyperbolische Tangente und/oder ein Sigmoid umfasst.

5. Verfahren (300) nach Anspruch 3 oder 4, wobei das Aktivierungssignal mindestens fünf Produkte jeweiliger Gewichtungen und Ausgaben von Neuronen des BNN umfasst.

6. Verfahren (300) nach einem der Ansprüche 1 oder 3 bis 5, wobei die Wahrscheinlichkeitsverteilung eine Gaußsche Verteilung oder eine gekürzte Gaußsche Verteilung ist.

7. Verfahren (300) nach einem der vorhergehenden Ansprüche, ferner umfassend Bewerten eines Stoppkriteriums für das wiederholte Training des Diskriminatormodells und des Generatormodells zumindest teilweise basierend auf Konfidenzwerten, die während des Trainings bestimmt wurden.

**8.** Verfahren (300) nach einem der vorhergehenden Ansprüche, ferner umfassend Erzeugen einer oder mehrerer synthetischer Instanzen unter Verwendung des trainierten Generatormodells und Verwenden der erzeugten synthetischen Instanzen zum Trainieren eines weiteren maschinenlernbaren Modells.

**9.** Verfahren (300) nach Anspruch 8, ferner umfassend Trainieren des weiteren maschinenlernbaren Modells unter Verwendung mindestens der einen oder der mehreren erzeugten synthetischen Instanzen.

**10.** Verfahren (300) nach einem der vorhergehenden Ansprüche, wobei das Generatormodell trainiert wird, um fehlende Komponenten bereitzustellen, um eine Teilinstanz abzuschließen, wobei das Verfahren ferner das Erhalten einer Teilinstanz und das Anwenden des Generatormodells umfasst, um einen Abschluss der Teilinstanz zu erhalten.

**11.** System (100) zum Trainieren eines Generatormodells, wobei das Generatormodell dazu ausgelegt ist, synthetische Instanzen zu erzeugen, und ein Diskriminatormodell dazu ausgelegt ist, Diskriminatorbewertungen für Eingabeinstanzen zu bestimmen, wobei eine Diskriminatorbewertung für eine Eingabeinstanz angibt, ob die Eingabeinstanz eine synthetische Instanz oder eine nicht-synthetische Instanz ist, wobei das Diskriminatormodell dazu ausgelegt ist, zusätzlich einen Konfidenzwert der Diskriminatorbewertung der Eingangsinstanz zu bestimmen, wobei der Konfidenzwert eine Konfidenz des Diskriminatormodells in einer Vorhersage angibt, die durch die Diskriminatorbewertung basierend auf der Eingabeinstanz gegeben wird, wobei das Diskriminatormodell ein Bayessches neuronales Netzwerk (BNN) umfasst, wobei eine Gewichtung zwischen einem ersten und einem zweiten Neuron des BNN durch eine Wahrscheinlichkeitsverteilung definiert ist, wobei das Trainieren des Diskriminatormodells Lernen der Gewichtung umfasst, wobei das BNN eine Wahrscheinlichkeitsverteilung für die Diskriminatorausgabe bereitstellt, wobei die Diskriminatorbewertung ein Mittelwert der Wahrscheinlichkeitsverteilung ist und der Konfidenzwert eine Varianz der Wahrscheinlichkeitsverteilung ist, wobei das System Folgendes umfasst:

- eine Datenschnittstelle (120) zum Zugreifen auf Daten, die einen Satz von nicht-synthetischen Instanzen (030) und Parameter des Generatormodells (041) und des Diskriminatormodells (042) repräsentieren; und
- ein Prozessorteilsystem (140), das ausgelegt ist zum Lernen der Parameter des Generatormodells und des Diskriminatormodells durch wiederholtes Trainieren des Diskriminatormodells unter Verwendung des Generatormodells und des Satzes von nicht-synthetischen Instanzen und Trainieren des Generatormodells unter Verwendung des Diskriminatormodells, umfassend:

- Trainieren des Generatormodells durch Optimieren einer ersten Zielfunktion, die die Erzeugung synthetischer Instanzen belohnt, die das Diskriminatormodell als nicht-synthetische Instanzen bestimmt, wobei die erste Zielfunktion ferner eine hohe Konfidenz für erzeugte Instanzen belohnt, die als nicht-synthetische Instanzen bestimmt wurden, und eine geringe Konfidenz für erzeugte Instanzen vergibt, die als synthetische Instanzen bestimmt wurden; und
- Trainieren des Diskriminatormodells durch Optimieren einer zweiten Zielfunktion, die eine korrekte Bestimmung belohnt, ob Eingabeinstanzen synthetische Instanzen oder nicht-synthetische Instanzen sind, wobei die zweite Zielfunktion ferner eine hohe Konfidenz für korrekte Bestimmungen und eine geringe Konfidenz für falsche Bestimmungen vergibt, wobei die synthetischen Instanzen, Eingabeinstanzen und nicht-synthetischen Instanzen Bilder sind.

**12.** System (100) nach Anspruch 11, wobei das Prozessorteilsystem ferner dazu ausgelegt ist, eine oder mehrere synthetische Instanzen unter Verwendung des trainierten Generatormodells zu erzeugen und die erzeugte eine oder die erzeugten mehreren synthetischen Instanzen zur Verwendung beim Trainieren eines weiteren maschinenlernbaren Modells auszugeben.

**13.** Computerlesbares Medium (400), das Daten (410) umfasst, die Anweisungen repräsentieren, die bei Ausführung durch ein Prozessorsystem das Prozessorsystem dazu veranlassen, das computer-implementierte Verfahren nach einem der Ansprüche 1 bis 10 durchzuführen.

**Revendications**

**1.** Procédé mis en œuvre par ordinateur (300) d'entraînement d'un modèle générateur, dans lequel le modèle générateur est configuré pour générer des instances synthétiques et un modèle discriminateur est configuré pour déterminer des notes d'évaluation de discriminateur pour des instances d'entrée, une note d'évaluation de discriminateur pour une instance d'entrée indiquant que l'instance d'entrée est une instance synthétique ou une instance non synthétique, dans lequel le modèle discriminateur est configuré pour déterminer de plus une note d'évaluation de confiance de la note d'évaluation de discriminateur de l'instance d'entrée, dans lequel la note d'évaluation de confiance indique une confiance du modèle discriminateur dans une prédiction donnée par la note d'évaluation de discriminateur sur la base de l'instance d'entrée, dans lequel le modèle discriminateur comprend un réseau neuronal bayésien (« Bayesian Neural Network », BNN), dans lequel un poids entre des premier et second neurones du BNN est défini par une distribution de probabilité, l'entraînement du modèle discriminateur comprenant l'apprentissage du poids, le BNN fournissant une distribution de probabilité pour la sortie de discriminateur, où la note d'évaluation de discriminateur est une moyenne de la distribution de probabilité et la note d'évaluation de confiance est une variance de la distribution de probabilité, le procédé mis en œuvre par ordinateur comprenant les étapes de :

- l'accès (310) à un ensemble d'instances non synthétiques et de paramètres du modèle générateur et du modèle discriminateur ; et
- l'apprentissage (320) des paramètres du modèle générateur et du modèle discriminateur par, de façon répétée, le biais de l'entraînement du modèle discriminateur en utilisant le modèle générateur et l'ensemble d'instances non synthétiques et de l'entraînement du modèle générateur en utilisant le modèle discriminateur, comprenant :

- l'entraînement du modèle générateur (330) en optimisant une première fonction objective récompensant la génération d'instances synthétiques que le modèle discriminateur détermine comme étant des instances non synthétiques, dans lequel la première fonction objective accorde en outre une récompense de haute confiance pour des instances générées déterminées comme étant des instances non synthétiques, et de basse confiance pour des instances générées déterminées comme étant des instances synthétiques ; et
- l'entraînement du modèle discriminateur (340) en optimisant une seconde fonction objective récompensant une détermination correcte que des instances d'entrée sont des instances synthétiques ou des instances non synthétiques, dans lequel la seconde fonction objective accorde en outre une récompense de haute confiance pour des déterminations correctes et de basse confiance pour des déterminations incorrectes, dans lequel les instances synthétiques, instances d'entrée, et instances non synthétiques sont des images.

2. Procédé (300) selon la revendication 1, comprenant la détermination d'une probabilité du modèle discriminateur classifiant une instance d'entrée comme étant une instance synthétique ou comme étant une instance non synthétique, la probabilité étant une fonction de la note d'évaluation de discriminateur et de la note d'évaluation de confiance, et définissant la première fonction objective et/ou la seconde fonction objective sur la base de la probabilité.

3. Procédé (300) selon la revendication 1, dans lequel une sortie des seconds neurones est définie en appliquant une fonction d'activation à un signal d'activation, le signal d'activation étant basé sur le produit dudit poids et la sortie du premier neurone, le procédé comprenant la détermination d'une moyenne et d'une variance du signal d'activation sur la base dudit poids et d'une moyenne et d'une variance de la sortie du premier neurone, et la détermination d'une moyenne et d'une variance de la sortie des seconds neurones sur la base de la moyenne et de la variance de la sortie du premier neurone.

4. Procédé (300) selon la revendication 3, dans lequel la fonction d'activation comprend un ou plusieurs d'une unité linéaire rectifiée, d'une tangente hyperbolique, et d'une sigmoïde.

5. Procédé (300) selon la revendication 3 ou 4, dans lequel le signal d'activation comprend au moins cinq produits de poids respectifs et de sorties de neurones du BNN.

6. Procédé (300) selon l'une quelconque des revendications 1, ou 3 à 5, dans lequel la distribution de probabilité est une distribution gaussienne ou une distribution gaussienne tronquée.

7. Procédé (300) selon l'une quelconque des revendications précédentes, comprenant en outre l'évaluation d'un critère d'arrêt pour l'entraînement répété du modèle discriminateur et du modèle générateur sur la base au moins en partie des notes d'évaluation de confiance déterminées durant ledit entraînement.

8. Procédé (300) selon l'une quelconque des revendications précédentes, comprenant en outre la génération d'une ou de plusieurs instances synthétiques en utilisant le modèle générateur entraîné, et en utilisant les instances synthétiques générées pour l'entraînement d'un modèle d'apprentissage machine supplémentaire.

9. Procédé (300) selon la revendication 8, comprenant en outre l'entraînement du modèle d'apprentissage machine supplémentaire en utilisant au moins l'une ou les plusieurs instances synthétiques générées.

10. Procédé (300) selon l'une quelconque des revendications précédentes, dans lequel le modèle générateur est entraîné pour fournir des composants manquants pour compléter une instance partielle, le procédé comprenant en outre l'obtention d'une instance partielle et l'application du modèle générateur pour permettre de compléter l'instance partielle.

11. Système (100) pour l'entraînement d'un modèle générateur, dans lequel le modèle générateur est configuré pour générer des instances synthétiques et un modèle discriminateur est configuré pour déterminer des notes d'évaluation de discriminateur pour des instances d'entrée, une note d'évaluation de discriminateur pour une instance d'entrée indiquant que l'instance d'entrée est une instance synthétique ou une instance non synthétique, dans lequel le modèle discriminateur est configuré pour déterminer de plus une note d'évaluation de confiance de la note d'évaluation de discriminateur de l'instance d'entrée, dans lequel la note d'évaluation de confiance indique une confiance du modèle discriminateur dans une prédiction donnée par la note d'évaluation de discriminateur sur la base de l'instance d'entrée, dans lequel le modèle discriminateur comprend un réseau neuronal bayésien (« Bayesian Neural Network », BNN), dans lequel un poids entre des premier et second neurones du BNN est défini par une distribution de probabilité, l'entraînement du modèle discriminateur comprenant l'apprentissage du poids, le BNN fournissant une distribution de probabilité pour la sortie de discriminateur, où la note d'évaluation de discriminateur est une moyenne de la distribution de probabilité et la note d'évaluation de confiance est une variance de la distribution de probabilité, le système comprenant :

- une interface de données (120) pour accéder à des données représentant un ensemble d'instances non synthétiques (030) et des paramètres du modèle générateur (041) et du modèle discriminateur (042) ; et
- un sous-système processeur (140) configuré pour l'apprentissage des paramètres du modèle générateur et du modèle discriminateur par, de façon répétée, le biais de l'entraînement répété du modèle discriminateur en utilisant le modèle générateur et l'ensemble d'instances non synthétiques et de l'entraînement du modèle générateur en utilisant le modèle discriminateur, comprenant :

- l'entraînement du modèle générateur en optimisant une première fonction objective récompensant la génération d'instances synthétiques que le modèle discriminateur détermine comme étant des instances non synthétiques, dans lequel la première fonction objective accorde en outre une récompense de haute confiance pour des instances générées déterminées comme étant des instances non synthétiques, et de basse confiance pour des instances générées déterminées comme étant des instances synthétiques ; et
- l'entraînement du modèle discriminateur en optimisant une seconde fonction objective récompensant une détermination correcte que des instances d'entrée sont des instances synthétiques ou des instances non synthétiques, dans lequel la seconde fonction objective accorde en outre une récompense de haute confiance pour des déterminations correctes et de basse confiance pour des déterminations incorrectes, dans lequel les instances synthétiques, instances d'entrée, et instances non synthétiques sont des images.

12. Système (100) selon la revendication 11, dans lequel le sous-système processeur est en outre configuré pour générer une ou plusieurs instances synthétiques en utilisant le modèle générateur entraîné et pour sortir l'une ou des plusieurs instances synthétiques générées pour l'utilisation dans l'entraînement d'un modèle d'apprentissage machine supplémentaire.

13. Support lisible par ordinateur (400) comprenant des données (410) représentant des instructions qui, lorsqu'elles sont exécutées par un système processeur, amènent le système processeur à réaliser le procédé mis en œuvre par ordinateur selon l'une quelconque des revendications 1 à 10.

Fig. 1

Fig. 2

300

310

320

330

340

Fig. 3

400    410

Fig. 4

**EP 3 796 220 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019197670 A1
- US 2019130266 A1
- US 2019197368 A1

### Non-patent literature cited in the description

- **I. GOODFELLOW et al.** *Generative Adversarial Networks*, https://arxiv.org/abs/1406.2661
- **MARIIA VLADIMIROVA et al.** Understanding Priors in Bayesian Neural Networks at the Unit Level. *PROCEEDINGS OF THE 36TH INTERNATIONAL CONFERENCE ON MACHINE LEARNING*, 15 June 2019, vol. 97, 6458-6467
- **KINGMA** ; **BA**. *Adam: A Method for Stochastic Optimization*, https://arxiv.org/abs/1412.6980
- **J. YOON et al.** *GAIN: Missing Data Imputation using Generative Adversarial Nets*, https://arxiv.org/abs/1806.02920